(19) Europäisches Patentamt
European Patent Office
Office européen des brevets

(11) **EP 2 548 796 B1**

## (12) EUROPÄISCHE PATENTSCHRIFT

(45) Veröffentlichungstag und Bekanntmachung des Hinweises auf die Patenterteilung:
**26.11.2014  Patentblatt 2014/48**

(21) Anmeldenummer: **12172467.8**

(22) Anmeldetag: **18.06.2012**

(51) Int Cl.:
***B63B 9/08*** *(2006.01)*      ***G01C 13/00*** *(2006.01)*

(54) **Analyse der Wellenlaufrichtung mittels Korrelation**

Analysis of a wave pitch by means of correlation

Analyse du sens de propagation des ondes par corrélation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2011  DE 102011107600**

(43) Veröffentlichungstag der Anmeldung:
**23.01.2013  Patentblatt 2013/04**

(73) Patentinhaber: **ThyssenKrupp Marine Systems GmbH**
**24143 Kiel (DE)**

(72) Erfinder:
• **Zheng, Qinghua**
**82024 Taufkirchen (DE)**
• **Dignath, Florian**
**81249 München (DE)**
• **Bauer, Markus**
**85354 Freising (DE)**
• **Diekmann, Andreas**
**81669 München (DE)**
• **Scharmacher, Manuel**
**24114 Kiel (DE)**

(74) Vertreter: **Patentanwälte Vollmann & Hemmer**
**Wallstraße 33a**
**23560 Lübeck (DE)**

(56) Entgegenhaltungen:
EP-A2- 2 312 271      JP-A- 6 347 548
US-A- 3 790 926      US-A1- 2011 060 525
US-B1- 6 273 015      US-B1- 6 382 022

**Beschreibung**

Die Erfindung betrifft ein Verfahren zur Bestimmung von Seegangsgrößen.

Auf die Stabilität des Schwimm- bzw. Fahrverhaltens von Wasserfahrzeugen haben Seegangsgrößen entscheidenden Einfluss. Beispielsweise kann es bei bestimmten Begegnungsfrequenzen der Wasserwellen mit dem Wasserfahrzeug zu parametererregten Rollschwingungen kommen. Diese führen im Resonanzfall zu stark erhöhten Rollwinkeln. Beispielsweise sind bei großen Containerschiffen Rollwinkel von mehr als 20° berichtet worden. Um Situationen, die die Stabilität eines Wasserfahrzeugs beeinträchtigen können, zuverlässig vorhersagen zu können, ist es notwendig, Seegangsgrößen, wie etwa die Wellenrichtung und die Wellenperiode, zu bestimmen.

Dazu ist es bekannt, freischwimmende Wellenbojen, beispielsweise den "Directional Waverider MK III" des niederländischen Herstellers Datawell BV, einzusetzen. Auch verankerte Bojen werden für die Messung von Seegangsgrößen eingesetzt, beispielsweise im Moored Buoy Programm des US-Departments of Commerce, National Oceanic and Atmospheric Administration. Nachteilig am Einsatz von Bojen ist jedoch, dass diese die Seegangsgrößen nur an wenigen Orten erfassen, sodass nur bedingt genau auf diejenigen Seegangsgrößen geschlossen werden kann, die die Stabilität des Wasserfahrzeugs gefährden.

Verbesserungen nutzen gegenwärtig Radareinrichtungen des Wasserfahrzeugs, um Seegangsgrößen am Ort des Wasserfahrzeugs selbst zu erfassen. Jedoch hängt die Signalqualität solcher Radareinrichtungen von den Witterungsbedingungen ab. Insbesondere bei starkem Regen oder Schneefall wird das Radarsignal und damit die Bestimmung von Seegangsgrößen beeinträchtigt. Ferner besteht keine direkte Beziehung zwischen rückgestreutem Radarsignal und der Seegangsgröße. Darüber hinaus ist die Installation einer solchen Radareinrichtung teuer und zeitaufwändig.

US 6,382,022 B1 offenbart eine Vorrichtung und ein Verfahren zur Messung von Seegangsgrößen von einem Wasserfahrzeug aus, bei welchem Mittel unter anderem zur Bestimmung von Wellenhöhen und zur Bestimmung der Position des Wassergefährts vorgesehen sind. Auch bei diesem System ist nachteilig, dass beispielsweise die Messung der Wellenhöhe abhängig ist von den Witterungsbedingungen. So kann beispielsweise ein starker Regenfall die Messung der Wellenhöhe beeinflussen.

Es ist daher Aufgabe der Erfindung, ein verbessertes Verfahren zur Bestimmung von Seegangsgrößen bereitzustellen. Insbesondere soll dieses Verfahren eine hohe Genauigkeit aufweisen und zuverlässig und witterungsunabhängig sein.

Diese Aufgabe wird durch ein Verfahren mit den im Anspruch 1 angegebenen Merkmalen sowie durch ein Verfahren mit den in Anspruch 5 angegebenen Merkmalen gelöst. Vorteilhafte Weiterbildungen der Erfindung ergeben sich aus den zugehörigen Unteransprüchen, der nachfolgenden Beschreibung und der Zeichnung.

Das erfindungsgemäße Verfahren dient zur Bestimmung von Seegangsgrößen und wird auf einem Wasserfahrzeug durchgeführt. Bei dem Verfahren werden die zeitlichen Verläufe mindestens zweier Bewegungsgrößen des Wasserfahrzeugs erfasst. Dabei wird aus zumindest einem Paar der zeitlichen Verläufe mindestens ein Korrelationswert ermittelt und zur Bestimmung einer oder mehrerer Seegangsgrößen herangezogen.

Mit dem ermittelten Korrelationswert kann ein zeitlicher Zusammenhang der zeitlichen Verläufe der zumindest zwei Bewegungsgrößen bestimmt werden. Dieser Zusammenhang der zeitlichen Verläufe bildet bei dem Verfahren ein Maß für die zu bestimmende Seegangsgröße oder die zu bestimmenden Seegangsgrößen.

Trifft beispielsweise eine Front von Wasserwellen von steuerbord voraus auf einen Rumpf eines Wasserfahrzeugs, so beginnt sich der Rumpf zunächst um die Gierachse des Wasserfahrzeugs nach backbord zu drehen. Erreicht dieselbe Front nachfolgend den schwerpunktsnahen Bereich des Wasserfahrzeugs, so tritt eine Rollbewegung des Wasserfahrzeugs nach backbord auf. Somit hängen die zeitlichen Verläufe von Gierwinkel und Rollwinkel auf eine für die Wellenlaufrichtung der Wasserwellen charakteristische Weise zeitlich zusammen. Dieser zeitliche Zusammenhang stellt folglich ein Maß für die Wellenlaufrichtung relativ zum Kurs des Wasserfahrzeugs dar. Wird aus den Verläufen von Gierund Rollwinkel ein Korrelationswert ermittelt, kann mit diesem der zeitliche Zusammenhang der zeitlichen Verläufe von Gier- und Rollwinkel quantifiziert werden. Somit kann der Korrelationswert zur Bestimmung der Wellenlaufrichtung relativ zum Kurs des Wasserfahrzeugs als Seegangsgröße herangezogen werden.

Insbesondere bilden bei dem erfindungsgemäßen Verfahren die Hubgeschwindigkeit des Wasserfahrzeugs und der Stampfwinkel des Wasserfahrzeugs zwei Bewegungsgrößen, deren zeitliche Verläufe erfasst werden. Ferner bevorzugt umfassen die zumindest zwei Bewegungsgrößen die Hubgeschwindigkeit und die Stampfwinkelgeschwindigkeit des Wasserfahrzeugs und/oder die Gierwinkelgeschwindigkeit und den Stampfwinkel.

Mit dem erfindungsgemäßen Verfahren kann die Bestimmung von Seegangsgrößen am Ort des Wasserfahrzeugs selbst erfolgen. Damit gewährleistet das Verfahren eine Bestimmung der für die Stabilität des Wasserfahrzeugs relevanten Seegangsgrößen mit einer hohen Genauigkeit. Erfindungsgemäß erfolgt eine Bestimmung von Seegangsgrößen unabhängig von den Witterungsbedingungen. Ferner sind bei dem erfindungsgemäßen Verfahren sämtliche für die Stabilität des Wasserfahrzeugs relevanten Seegangsgrößen bestimmbar. Das erfindungsgemäße Verfahren weist damit sämtliche Vorteile der aus dem Stand der Technik bekannten Verfahren auf, ohne jedoch den Beschränkungen dieser Verfahren zu unterliegen. So erfolgt die Bestimmung der Seegangsgrößen zugleich witterungsunabhängig wie bei der Beobachtung von Wellenbojen als auch am Ort des Wasserfahrzeugs wie bei der Nutzung von Radareinrichtungen an Bord des Wasserfahrzeugs.

Ferner ergibt sich im Vergleich zur Bestimmung von Seegangsgrößen mittels Wellenbojen der Vorteil, dass bei der erfindungsgemäßen Bestimmung über die Bewegung des Wasserfahrzeugs auch Drehbewegungen wie insbesondere die Gierbewegung erfasst und herangezogen werden können. So ist bei einem Wasserfahrzeug die Längs- bzw. Querbewegung regelmäßig ausgezeichnet. Bei Wellenbojen ist eine Erfassung von Drehbewegungen aufgrund ihrer zumeist runden Form schwierig. Zudem treten aufgrund dieser runden Form bei Wellenbojen zumeist keine Drehbewegungen auf.

Vorteilhaft werden bei dem erfindungsgemäßen Verfahren gerade diejenigen Anteile des Seegangs erfasst, welche einen wesentlichen Einfluss auf die Stabilität des Wasserfahrzeugs haben. So haben beispielsweise diejenigen Wasserwellen, deren Wellenlänge deutlich kleiner ist als die auf die Ausbreitungsrichtung der Wasserwellen projizierte Abmessung des Wasserfahrzeugs einen vernachlässigbaren Einfluss auf die Bewegungsgrößen des Wasserfahrzeugs. Diese Wasserwellen haben zugleich nur einen unwesentlichen Einfluss auf die Stabilität des Wasserfahrzeugs. Für die Stabilität des Wasserfahrzeugs unwesentliche Anteile des Seegangs werden durch das erfindungsgemäße Verfahren typischerweise nicht ermittelt. Ferner erfordert die Durchführung des erfindungsgemäßen Verfahrens nicht zwangsläufig einen großen apparativen Aufwand, da die Erfassung der Bewegungsgrößen einfach mittels Bewegungssensoren, wie beispielsweise Beschleunigungssensoren, erfolgen kann.

Ein weiterer Vorteil des erfindungsgemäßen Verfahrens besteht darin, dass bei der Ermittlung des Korrelationswerts nicht allein der zeitliche Zusammenhang einzelner zeitlicher Werte der Bewegungsgrößen ermittelt wird. Vielmehr wird der Zusammenhang der erfassten zeitlichen Verläufe, d.h. der kontinuierlich über die Zeit oder zu mehreren Zeitpunkten erfassten zeitlichen Entwicklungen, der Bewegungsgrößen ermittelt. Somit gehen die Werte der Bewegungsgrößen zu einer Mehrzahl von Zeitpunkten (oder ggf. sogar die kontinuierlich erfasste Entwicklung der Bewegungsgrößen über die Zeit) in die Ermittlung des zeitlichen Zusammenhangs der zeitlichen Verläufe der Bewegungsgrößen ein. Die Bestimmung der Seegangsgröße oder der Seegangsgrößen kann somit mit einer hohen Zuverlässigkeit und Genauigkeit erfolgen.

Zweckmäßig werden bei dem erfindungsgemäßen Verfahren die Bewegungsgrößen über einen Zeitraum von 2 bis 20 Minuten erfasst, insbesondere für eine Dauer von weniger als 10 Minuten. Typischerweise reicht für die Bestimmung von Seegangsgrößen eine Erfassung der Bewegungsgrößen für eine Dauer von 5 Minuten bereits aus. Damit ist die erforderliche Dauer zur Erfassung der Bewegungsgrößen deutlich kürzer als die typischen Erfassungszeiträume bei der Verwendung von Wellenbojen, welche regelmäßig 30 Minuten oder länger betragen.

Die Erfassung der zeitlichen Verläufe der zumindest zwei Bewegungsgrößen erfolgt bei dem Verfahren geeigneterweise kontinuierlich oder mittels einer Vielzahl von Einzelmessungen. Die Einzelmessungen folgen dabei in kürzeren zeitlichen Abständen aufeinander als die für das Wasserfahrzeug typischerweise auftretenden Bewegungsperioden, beispielsweise in zeitlichen Abständen von 0,1 Sekunden. Vorteilhafterweise wird bei dem Verfahren der Einfluss von Kurswechseln des Wasserfahrzeugs auf die erfassten Bewegungsgrößen herausgerechnet. Bevorzugt erfolgt die Erfassung der zeitlichen Verläufe der Bewegungsgrößen jeweils in Zeitabschnitten mit näherungsweise konstantem Kurs des Wasserfahrzeugs. Die erfassten Bewegungsgrößen der jeweiligen Abschnitte werden etwa in ein erdfestes Koordinatensystem transformiert, in welchem der Kurs des Schiffes keinen Einfluss besitzt. Die Messdaten werden zudem bevorzugt hochpassgefiltert, um ausschließlich die durch den Seegang bedingte Bewegung des Wasserfahrzeugs analysieren zu können. Die Grenzfrequenz des Hochpassfilters wird dabei so gewählt, dass durch Wasserwellen bedingte Bewegungen durch die Hochpassfilterung nicht oder nahezu nicht beeinflusst wird, wobei jedoch Richtungs- und/oder Geschwindigkeitsänderungen des Wasserfahrzeugs herausgefiltert werden. Insbesondere ist die Grenzfrequenz 40 mHz.

Bei dem Verfahren werden bevorzugt die zeitlichen Verläufe von zumindest drei Bewegungsgrößen des Wasserfahrzeugs erfasst und es wird aus je einem von mehreren Paaren zeitlicher Verläufe mindestens ein Korrelationswert ermittelt. Auf diese Weise können zum einen mehrere Seegangsgrößen zugleich bestimmt werden. Alternativ oder zusätzlich wird dieselbe Seegangsgröße mehrfach mittels der mehreren ermittelten Korrelationswerte bestimmt. So werden die Zuverlässigkeit und die Genauigkeit des Verfahrens weiter erhöht.

Vorzugsweise wird bei dem Verfahren zumindest ein solcher Korrelationswert ermittelt, der dem Wert der Kreuzkorrelationsfunktion des zumindest einen Paares der zeitlichen Verläufe bei einem verschwindenden zeitlichen Versatz der Verläufe zueinander entspricht. Ein solcher Korrelationswert entspricht dann dem y-Achsenabschnitt einer Kreuzkorrelationsfunktion in Abhängigkeit vom zeitlichen Versatz zwischen den zeitlichen Verläufen des Paares.

In einer besonders vorteilhaften Weiterbildung des erfindungsgemäßen Verfahrens werden aus zumindest einem Paar zeitlicher Verläufe mehrere Korrelationswerte in Form einer Kreuzkorrelationsfunktion herangezogen. D.h. es werden mehrere Korrelationswerte mit unterschiedlichem zeitlichen Versatz der zeitlichen Verläufe der Bewegungsgrößen zueinander ermittelt, die in Abhängigkeit von diesem zeitlichen Versatz die Kreuzkorrelationsfunktion bilden. Aus dieser Kreuzkorrelationsfunktion werden zweckmäßig weitere Parameter bestimmt, die zur Bestimmung der einen oder mehreren Seegangsgrößen herangezogen werden.

Vorzugsweise wird bei dem Verfahren abhängig vom Funktionsverlauf der Kreuzkorrelationsfunktion ein zeitlicher Versatz der zeitlichen Verläufe des Paares zueinander ermittelt und zur Bestimmung der einen oder mehreren Seegangsgrößen herangezogen. Insbesondere wird dabei derjenige zeitliche Versatz der zeitlichen Verläufe des Paares zueinander ermittelt, bei welchem die Kreuzkorrelationsfunktion ihren Maximalwert erreicht. Dieser zeitliche Versatz bildet vorteilhaft ein direktes Maß für den zeitlichen Zusammenhang der zeitlichen Verläufe.

Alternativ oder zusätzlich zu dem vorbeschriebenen ersten erfindungsgemäßen Verfahren wird in einem weiteren zweiten erfindungsgemäßen Verfahren der zeitliche Verlauf zumindest einer Bewegungsgröße des Wasserfahrzeugs erfasst und aus dem zeitlichen Verlauf dieser Bewegungsgröße eine Autokorrelationsfunktion ermittelt. Der Funktionsverlauf der Autokorrelationsfunktion wird bei diesem Verfahren zur Bestimmung einer oder mehrerer Seegangsgrößen herangezogen. Für dieses zweite erfindungsgemäße Verfahren ergeben sich die Vorteile des ersten erfindungsgemäßen Verfahrens in entsprechender Weise.

Bevorzugt wird bei diesem Verfahren abhängig vom Funktionsverlauf der Autokorrelationsfunktion ein zeitlicher Versatz des zeitlichen Verlaufs der zumindest einen Bewegungsgröße zu sich selbst ermittelt und herangezogen. Insbesondere wird ein solcher zeitlicher Versatz ermittelt, bei welchem der Autokorrelationswert den zweithöchsten Wert und/oder den lokalen Maximalwert eines dem globalen Maximum benachbarten lokales Maximums aufweist. Vorteilhaft wird so bei periodischen Bewegungsgrößen deren Periodendauer ermittelt.

Bevorzugt handelt es sich bei der zumindest einen Bewegungsgröße um eine solche Bewegungsgröße, bei welcher keine Eigenbewegung (beispielsweise eine Eigenschwingung) des Wasserfahrzeugs im Wasser auftritt. Solche Bewegungsgrößen bilden etwa die Quer- und/oder Längsposition des Schwerpunkts des Wasserfahrzeugs, d.h. die Position des Schwerpunkts quer zum oder längs dem aktuellen Kurs des Wasserfahrzeugs und/oder der Gierwinkel des Wasserfahrzeugs. Alternativ oder zusätzlich sind solche Bewegungsgrößen eine erste oder höhere zeitliche Ableitung einer oder mehrerer der vorgenannten Bewegungsgrößen. Bei den genannten Bewegungsgrößen fehlen rückstellende Kräfte/Momente, die zu einer Eigenbewegung führen. Diese Bewegungsgrößen sind daher zu einem besonders großen Anteil von Seegangsgrößen bestimmt. Folglich kann dann die Bestimmung dieser Seegangsgrößen sehr zuverlässig erfolgen.

Bevorzugt ist bei den erfindungsgemäßen Verfahren die zumindest eine Seegangsgröße die Wellenlaufrichtung der Wasserwellen.

Bei einer vorteilhaften Weiterbildung der erfindungsgemäßen Verfahren ist die oder sind mehrere Seegangsgrößen die Begegnungsfrequenz der Wasserwellen mit dem Wasserfahrzeug und/oder eine oder mehrere Eigenfrequenzen des Wasserfahrzeugs im Seegang. Alternativ handelt es sich bei der oder den Seegangsgrößen um die Begegnungsperiode der Wasserwellen mit dem Wasserfahrzeug und/oder eine oder mehrere Periodendauern von Eigenbewegungen des Wasserfahrzeugs im Seegang.

Um die Seegangsgröße Wellenlaufrichtung der Wasserwellen zu bestimmen, werden dazu die beiden vorgenannten erfindungsgemäßen Verfahren miteinander kombiniert. Dabei wird insbesondere der gemäß dem ersten erfindungsgemäßen Verfahren ermittelte zeitliche Versatz der zeitlichen Verläufe eines Paares von Bewegungsgrößen mit der gemäß dem zweiten erfindungsgemäßen Verfahren ermittelten Begegnungsperiode der Wasserwellen mit dem Wasserfahrzeug ins Verhältnis gesetzt.

Dieses Verhältnis entspricht dann, bis auf einen Proportionalitätsfaktor, einer Phasenverschiebung der beiden zeitlichen Verläufe zueinander. Die Phasenverschiebung wiederum steht, sofern die Bewegungsgrößen durch die Wellenlaufrichtung der Wasserwellen beeinflusst sind, in direktem Zusammenhang mit der Wellenlaufrichtung der Wasserwellen. Somit wird bei dieser Weiterbildung des Verfahrens die Wellenlaufrichtung als die oder eine der Seegangsgrößen bestimmt. Beispielsweise wird die Phasenverschiebung der zeitlichen Verläufe von Hubposition des Wasserfahrzeugs und Stampfwinkel des Wasserfahrzeugs bestimmt, wobei die Wellenlaufrichtung der Wasserwellen von vorn und parallel zur Längsachse des Wasserfahrzeugs orientiert ist. Die Phasenverschiebung entspricht in diesem Falle näherungsweise dem halben Längsmaß des Wasserfahrzeugs dividiert durch die Wellenlänge der Wasserwellen multipliziert mit der zweifachen Kreiszahl. Bei einer Wellenlaufrichtung senkrecht zur Längsachse des Wasserfahrzeugs hingegen ist die Phasenverschiebung Null. Auf diese Weise lässt sich die Komponente der Wellenlaufrichtung parallel zur Längsachse des Wasserfahrzeugs bestimmen. Entsprechend lässt sich mit geeigneten Bewegungsgrößen des Wasserfahrzeugs die Komponente der Wellenlaufrichtung parallel zur Querachse des Wasserfahrzeugs bestimmen. Geeigneterweise werden bei den Verfahren die beiden derart bestimmten Komponenten der Wellenlaufrichtung miteinander, etwa durch Quotientenbildung, in Beziehung gesetzt und so die Wellenlaufrichtung vollständig bestimmt.

Bevorzugt werden bei den erfindungsgemäßen Verfahren ein zeitlicher Versatz der zeitlichen Verläufe eines Paares abhängig von der bzw. den Eigenfrequenzen des Wasserfahrzeugs im Seegang und/oder der Begegnungsfrequenz der Wasserwellen mit dem Wasserfahrzeug, insbesondere abhängig von dem oder den Verhältnissen der Eigenfrequenz und der bzw. den Begegnungsfrequenzen, ermittelt und zur Bestimmung des zumindest einen Korrelationswertes herangezogen. In analoger Weise kann der zeitliche Versatz abhängig von den reziprok mit den vorgenannten Frequenzen in Verbindung stehenden Periodendauern ermittelt werden.

Beispielsweise wird bei den erfindungsgemäßen Verfahren ein Vergleich der Periodendauern der durch die Seegangsgrößen erzwungenen Zwangsbewegung mit der Eigenbewegung des Wasserfahrzeugs im Wasser vorgenommen. Diese Periodendauern der Eigenbewegung des Wasserfahrzeugs werden entweder vorab durch Rechnung und/oder Messung bestimmt und/oder wie vorstehend beschrieben mit den erfindungsgemäßen Verfahren bestimmt. Ist beispielsweise die durch die Seegangsgrößen erzwungene Zwangsbewegung des Wasserfahrzeugs schneller als die relevante Eigenbewegung des Wasserfahrzeugs, so wird das Vorzeichen des y-Achsenabschnitts gewechselt und die Phasenverschiebung um die Kreiszahl (oder aber der zeitliche Versatz entsprechend) verschoben. Solche Eigenbewegungen des Wasserfahrzeugs sind dabei unter Umständen Eigenbewegungen in beiden jeweils einer Kreuzkorrelation unterzogenen Bewegungsgrößen. Abhängig vom Ergebnis der Vergleiche der Periodendauern wird daher gegebenenfalls ein zweifacher Vorzeichenwechsel des y-Achsenabschnitts und eine Phasenverschiebung um die doppelte Kreiszahl vorgenommen.

Zweckmäßig ist bzw. sind bei den erfindungsgemäßen Verfahren eine oder mehrere der Bewegungsgrößen die Schwerpunktsposition des Wasserfahrzeugs entlang einer Hauptträgheitsachse des Wasserfahrzeugs und/oder die erste oder eine höhere zeitliche Ableitung der Schwerpunktsposition und/oder die Orientierung des Wasserfahrzeugs um eine Hauptträgheitsachse des Wasserfahrzeugs und/oder die erste oder eine höhere zeitliche Ableitung dieser Orientierung und/oder das bzw. die Vorzeichen einer oder mehrerer der vorgenannten Größen beurteilt von einem Referenznullwert.

Insbesondere ist bei den Verfahren die Seegangsgröße die Wellenlaufrichtung, wobei die Wellenlaufrichtung quadrantenweise bestimmt wird. Unter einer quadrantenweisen Bestimmung der Wellenlaufrichtung ist hierbei eine Bestimmung mit einer derartigen Genauigkeit zu verstehen, dass zumindest unterschieden wird, ob die Wasserwellen überwiegend von vorn, achtern, backbord oder steuerbord auf das Wasserfahrzeug treffen. Vorteilhaft genügt für eine quadrantenweise Bestimmung der Wellenlaufrichtung die Ermittlung von Korrelationswerten insoweit, dass geschlossen werden kann, welche der Bewegungsgrößen des Paares zuerst eine Bewegung in positiver Koordinatenrichtung durchführt. Für eine quadrantenweise Bestimmung der Wellenlaufrichtung wird erfindungsgemäß so verfahren, dass der Schnittpunkt mit der y-Achse der Kreuzkorrelationsfunktion und/oder die Phasenverschiebung bestimmt werden. Diese werden nachfolgend mit festen Grenzwerten verglichen. Aus diesem Vergleich wird auf die Wellenlaufrichtung geschlossen. Diese Bestimmung ist vorteilhaft sehr robust und lässt sich auch bei Bewegungsgrößen durchführen, bei welchen die Eigenbewegungen bzw. -schwingungen des Wasserfahrzeugs im Wasser den zeitlichen Verlauf der Bewegungsgrößen dominieren. Ferner ist das Verfahren in dieser Weiterbildung der Erfindung auch bei Bewegungsgrößen durchführbar, die sich ggf. situationsbedingt nur mit geringer Qualität erfassen lassen. In dieser Weiterbildung der Erfindung ist das Verfahren von der Qualität der Erfassung der Bewegungsgrößen des Wasserfahrzeugs weitgehend unabhängig.

Bei den erfindungsgemäßen Verfahren wird vorteilhaft der Umlaufsinn des zeitlichen Umlaufs des Bewegungszustandes des Wasserfahrzeugs entlang einer aus einer gegenseitigen Abhängigkeit zumindest zweier Bewegungsgrößen resultierenden Trajektorie erfasst und zur Ermittlung des Korrelationswertes und/oder zur Bestimmung der Seegangsgröße herangezogen. Die Zuverlässigkeit des erfindungsgemäßen Verfahrens ist so verbessert.

Dabei wird der Bewegungszustand eines Wasserfahrzeugs durch einen Zustandsvektor beschrieben, dessen Komponenten durch je eine der zumindest zwei zeitabhängigen Bewegungsgrößen gebildet sind. Der durch einen solchen Zustandsvektor beschriebene Zustandspunkt überstreicht mit der zeitlichen Änderung der den Zustandsvektor bildenden Bewegungsgrößen eine Trajektorie. Insbesondere weist eine solche Trajektorie die Form eines Ellipsoids auf, sofern die dominanten Frequenzen der Bewegungsgrößen des Zustandsvektors übereinstimmen. Bei einem zweikomponentigen Vektor ergibt sich beispielsweise eine Ellipse.

Die Trajektorie ist typischerweise aus diskreten Punkten entsprechend den diskreten Zeitpunkten der Erfassungen des zeitlichen Verlaufs der Bewegungsgrößen zusammengesetzt. Bei einer kontinuierlichen Erfassung der Bewegungsgrößen wird die Trajektorie geeigneterweise in eine Mehrzahl diskreter Punkte diskretisiert. Im Folgenden werden nun solche Punkte, aus welchen sich die Trajektorie zusammensetzt, betrachtet. Zur Bestimmung des Umlaufsinns wird ermittelt, an wie vielen Punkten der Trajektorie einerseits einer die Trajektorie teilenden Referenzachse eine Bewegung des Zustandspunkts in Richtung der Referenzachse auftritt und an wie vielen Punkten der Trajektorie andererseits dieser Referenzachse eine Bewegung in negativer Referenzachsenrichtung auftritt. Die Summe der derart ermittelten Punkte der Trajektorie wird zur Gesamtanzahl sämtlicher vorliegenden Punkte der Trajektorie ins Verhältnis gesetzt. Je nachdem, ob das Verhältnis größer oder kleiner als 50% ist, wird unterschieden, ob die Wellen z.B. von vorn oder von achtern auf das Wasserfahrzeug treffen.

Geeigneterweise wird bei einer ellipsenförmigen Trajektorie eine Hauptachse, insbesondere die längste Hauptachse, der Ellipse als Referenzachse gewählt.

Bei diesen Verfahren können auch die Zeitverläufe von drei Freiheitsgraden als Eingangsdaten gewählt werden, wobei sich eine dreidimensionale Trajektorie ergibt. Dabei wird dann zusätzlich zur Referenzachse eine Referenzebene zur Unterteilung der Punkte gewählt, wobei die Referenzachse Teil dieser Ebene ist. Entsprechend lässt sich das Verfahren auch auf noch höhere Dimensionen erweitern.

Alternativ wird der Umlaufsinn aus einer Summe lokaler Umlaufsinne berechnet. Dabei wird eine senkrecht auf der Trajektorie stehende Normalenrichtung *n* ermittelt, beispielsweise eine dritte Hauptachse eines die Trajektorie enthaltenden Ellipsoids, wenn mehr als zwei Bewegungsgrößen erfasst werden. Dann wird der lokale Umlaufsinn $U_i$ an einem Zustandspunkt $i$ besonders einfach gemäß der Gleichung

$$U_i = \text{sign}(\mathbf{r}_i \times (d\mathbf{r}_i/dt) \bullet \mathbf{n}) \qquad (1)$$

berechnet. Dabei ist $\mathbf{r}_i$ der Zustandsvektor am Zustandspunkt $i$ der Trajektorie und $d\mathbf{r}_i/dt$ die zeitliche Ableitung des Zustandsvektors $\mathbf{r}_i$. Für die Multiplikation $\mathbf{r}_i \times (d\mathbf{r}_i/dt)$ wird das Vektorprodukt verwendet und für die Multiplikation mit $\mathbf{n}$ das Skalarprodukt.

Nach Berechnung von $U_i$ für alle Zustandspunkte $i$ der Trajektorie ergibt sich der Umlaufsinn aus der Summe sämtlicher lokaler Umlaufsinne $U_i$.

Bevorzugt wird zumindest eine der Seegangsgrößen nach zumindest zwei voneinander abweichenden Verfahren, von denen zumindest eines ein erfindungsgemäßes Verfahren wie es vorhergehend beschrieben ist, bestimmt. Dabei werden die jeweils bestimmten Werte für die Seegangsgröße einem Vergleich miteinander unterzogen und es wird abhängig von diesem Vergleich die Güte der Bestimmung der Seegangsgröße ermittelt.

Zweckmäßigerweise ist dabei eines der Verfahren ein Verfahren wie es in der deutschen Patentanmeldung 10 2009 041 055 beschrieben worden ist, auf die in diesem Zusammenhang inhaltlich ausdrücklich Bezug genommen wird.

Vorteilhaft wird dabei insbesondere die zuvor beschriebene Bestimmung des Umlaufsinns in Kombination mit dem Verfahren aus dem in diese Beschreibung einbezogenen Dokument eingesetzt. Dabei werden zur Bestimmung des Umlaufsinns zweckmäßig dieselben Raumkomponenten der translatorischen Schwerpunktsbewegung des Wasserfahrzeugs wie in diesem Dokument beschrieben als Bewegungsgrößen gewählt, also der Hub, die Längsposition und/oder die Querposition des Wasserfahrzeugs und/oder eine erste oder höhere zeitliche Ableitung einer oder mehrerer der vorgenannten Größen.

Zweckmäßig werden die erfindungsgemäßen Verfahren auf einem Unterseeboot bei Überwasserfahrt eingesetzt. Ferner bevorzugt werden die Verfahren auf Containerschiffen und Yachten eingesetzt.

Nachfolgend wird die Erfindung anhand eines in den Zeichnungsfiguren dargestellten Ausführungsbeispiels näher erläutert. Es zeigen:

Fig. 1    ein Signalflussplan der erfindungsgemäßen Verfahren zur Bestimmung der Wellenlaufrichtung,

Fig. 2    eine exemplarische Kreuzkorrelationsfunktion und

Fig. 3    eine Trajektorie des Bewegungszustands des Wasserfahrzeugs.

Die erfindungsgemäßen Verfahren werden auf einem Containerschiff zur Bestimmung der Wellenlaufrichtung der Wasserwellen durchgeführt. Die Verfahren sind aber (nicht gesondert dargestellt) auch auf einem Unterseeboot bei Überwasserfahrt, auf einer Yacht oder einem beliebigen anderen Wasserfahrzeug durchführbar.

Als Bewegungsgrößen des Wasserfahrzeugs werden bei den Verfahren die sechs Freiheitsgrade des Containerschiffs und deren erste zeitliche Ableitungen zu einer Vielzahl von Zeitpunkten $t_0$, ..., $t_1$ im Zeitraum zwischen den Zeiten $t_0$ und $t_1$ erfasst. Die sechs Freiheitsgrade sind die Längsposition, die Querposition, der Hub, der Rollwinkel, der Stampfwinkel und der Gierwinkel des Containerschiffs. Die Zeitpunkte der Erfassung der Bewegungsgrößen erfolgt dabei im Abstand von 0,1 Sekunden. Die sechs Freiheitsgrade des Containerschiffs und ihre ersten zeitlichen Ableitungen sind in dem zeitabhängigen Vektor $\mathbf{x}(t)$ zusammengefasst. Diese Bewegungsgrößen werden in einer Signalaufbereitungseinrichtung zunächst mittels eines Bandpasses gefiltert, sodass Störanteile entfernt werden. Zugleich wird die nachfolgende Auswertung auf den relevanten Frequenzbereich beschränkt.

Ferner werden die zu den Zeitpunkten $t_0$, ..., $t_1$ erfassten Bewegungsgrößen zwischengespeichert 1. Somit stehen die Zeitverläufe aller sechs Freiheitsgrade und ihrer ersten zeitlichen Ableitungen, nämlich die zeitlichen Verläufe der Längsposition $x(t_0,...,t_1)$, der Querposition $y(t_0, ..., t_1)$, des Hubs $z(t_0, ..., t_1)$, des Rollwinkels $\Phi(t_0, ..., t_1)$, des Stampfwinkels $\Theta(t_0, ..., t_1)$ und des Gierwinkels $\Psi(t_0, ..., t_1)$ sowie die zeitlichen Verläufe $dx(t_0, ..., t_1)/dt$, $dy(t_0,..., t_1)/dt$, $dz(t_0, ..., t_1/dt)/dt$, $d\Phi(t_0, ..., t_1)/dt$, $d\Theta(t_0, ..., t_1)/dt$ und $d\Psi(t_0, ..., t_1)/dt$ ihrer zeitlichen Ableitungen für alle Zeitpunkte $t_0$, ..., $t_1$ zwischen $t_0$ und $t_1$ zur Verfügung und sind in einer Matrix $x(t_0,...,t_1)$ zusammengefasst.

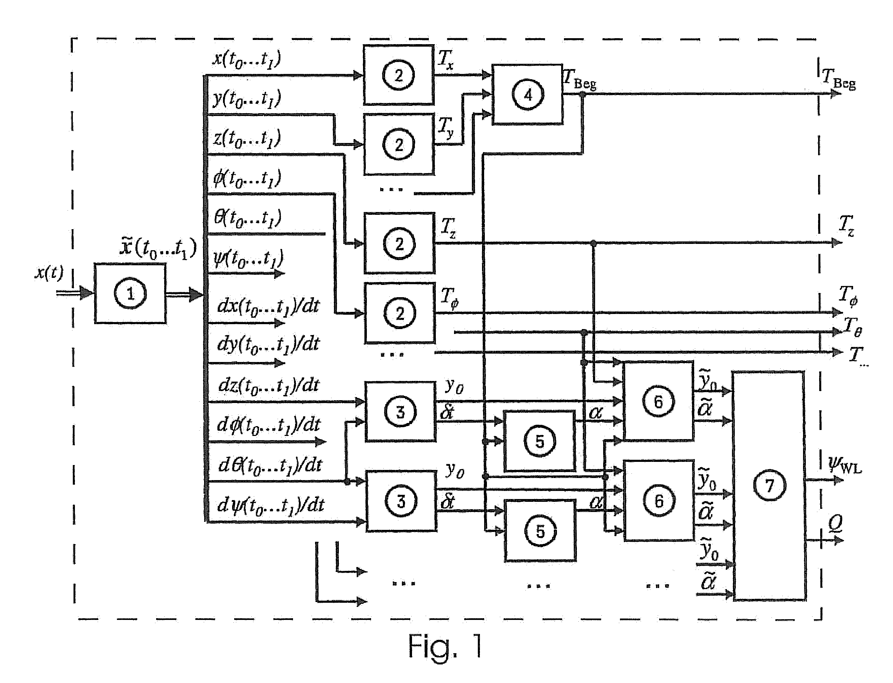

Diese Zeitverläufe werden zum einen jeweils einer Autokorrelationsberechnung 2 unterzogen. Dabei werden diejenigen zeitlichen Versätze der zeitlichen Verläufe der Bewegungsgrößen mit sich selbst bestimmt, bei welchen die Autokorrelation den zweithöchsten Wert erreicht. Die so bestimmten zeitlichen Versätze (in Fig. 1 nicht eigens dargestellt) bilden ein Maß für die Periodendauern der zeitlichen Verläufe der Bewegungsgrößen. Für die zeitlichen Verläufe $z(t_0, ..., t_1)$, $\Phi(t_0, ..., t_1)$ von Hub und Rollwinkel ergeben sich daraus die Periodendauern $T_z, T_\Phi$ der Hub- und der Rollbewegung, also die Periodendauern der Eigenbewegung des Containerschiffs im Seegang als Seegangsgrößen. Ferner ergeben sich aus den zeitlichen Verläufen x($t_0$, ..., $t_1$), y($t_0$,..., $t_1$), dz($t_0$, ..., $t_1$), dt, $\Psi$($t_0$, ..., $t_1$) in entsprechender Weise die Periodendauern $T_x$, $T_y$, $T_\Psi$ der durch die Wasserwellen bedingten Zwangsbewegung des Containerschiffs als Seegangsgrößen.

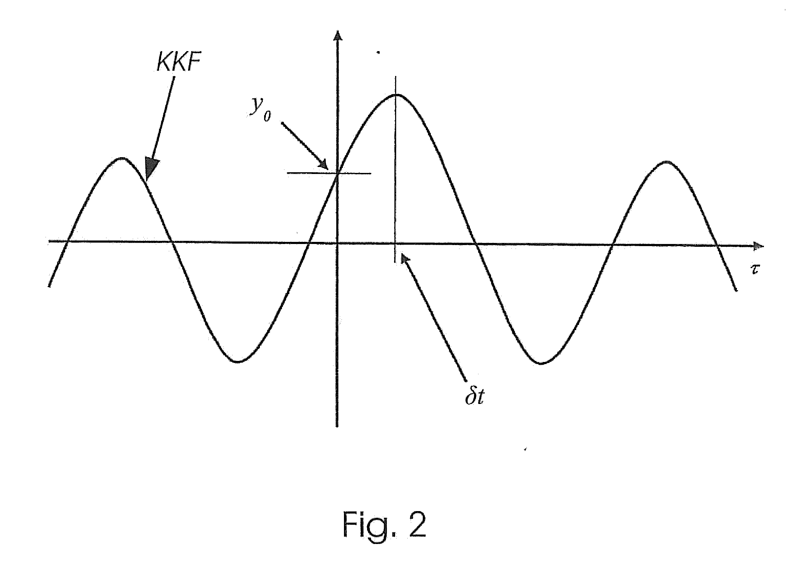

Zudem werden ausgewählte Paare von zeitlichen Verläufen (explizit in Fig. 1 dargestellt sind das Paar der zeitlichen Verläufe von Stampfwinkelgeschwindigkeit d$\Theta$($t_0$, ..., $t_1$)/dt und Gierwinkelgeschwindigkeit d$\psi$($t_0$, ..., $t_1$)/dt sowie das Paar der zeitlichen Verläufe von Hubgeschwindigkeit dz($t_0$, ..., $t_1$)/dt und Stampfwinkelgeschwindigkeit d$\Phi$($t_0$, ..., $t_1$))/dt einer Kreuzkorrelationsberechnung 3 unterzogen. Dabei werden aus den ausgewählten Paaren der zeitlichen Verläufe eine Vielzahl von Korrelationswerten für verschiedene zeitliche Versätze $\tau$ der zeitlichen Verläufe zueinander berechnet. Diese Vielzahl von Korrelationswerten bildet in Abhängigkeit von den zeitlichen Versätzen $\tau$ die Kreuzkorrelationsfunktion KKF (s. Fig. 2). Die so berechnete Kreuzkorrelationsfunktion KKF wird für die weitere Bestimmung von Seegangsgrößen derart herangezogen, dass zum einen der Korrelationswert des Paares zeitlicher Verläufe für verschwindenden zeitlichen Versatz $\tau$=0 zueinander bestimmt wird. Dieser Korrelationswert entspricht wie in Fig. 2 dargestellt dem y-Achsenabschnitt $y_0$ der Kreuzkorrelationsfunktion KKF. Zum anderen werden jeweils die Korrelationswerte der Kreuzkorrelationsfunktion KKF zur Ermittlung desjenigen zeitlichen Versatzes $\delta t$ herangezogen, für welchen der Wert der Kreuzkorrelationsfunktion KKF maximal ist. Der zeitliche Versatz $\delta t$ und der y-Achsenabschnitt $y_0$ werden nachfolgend für die Bestimmung der Wellenlaufrichtung $\psi_{WL}$ genutzt.

Ferner wird durch eine Ausgleichsrechnung 4 aus den berechneten Werten für die Periodendauern der Zwangsbewegung $T_x$, $T_y$ die Begegnungsperiodendauer $T_{Beg}$ für die Begegnung der Wasserwellen mit dem Containerschiff als Seegangsgröße ermittelt. Auf diese Begegnungsperiodendauer $T_{Beg}$ wird der aus der Kreuzkorrelation gem. Fig. 2 jeweils bestimmte zeitliche Versatz $\delta t$ normiert. Durch Hinzuziehung eines Proportionalitätsfaktors wird aus dem zeitlichen Versatz $\delta t$ jeweils die Phasenverschiebung a der Paare von zeitlichen Verläufen erhalten 5. Diese Phasenverschiebung a wird jeweils fallweise, und zwar abhängig von den Verhältnissen der Periodendauern der Eigen- und Zwangsbewegung, ggf. um $\pi$ verschoben 6, wobei gleichzeitig das Vorzeichen des Schnittpunktes mit der y-Achse $y_0$ gewechselt wird.

Die entsprechend modifizierten Schnittpunkte mit der y-Achse $y_0$ und die modifizierten Phasenverschiebungen a werden gemeinsam einer Ausgleichsrechnung 7 unterzogen und es werden die Anteile der Wellenlaufrichtung in Längs- und Querrichtung des Containerschiffs bestimmt. Aus diesen Anteilen wird durch Quotientenbildung die Wellenlaufrichtung $\Psi_{WL}$ bestimmt. Darüber hinaus werden die jeweils ermittelten Anteile der Wellenlaufrichtung $\Psi_{WL}$ aus unterschiedlichen Paaren von Bewegungsgrößen miteinander verglichen und es wird ein Gütesignal Q für die Bestimmung der Wellenlaufrichtung $\Psi_{WL}$ ermittelt.

Optional und nicht eigens im Signalflussdiagramm gem. Fig. 1 dargestellt ist eine zusätzliche Einbeziehung einer alternativen Bestimmung der Wellenlaufrichtung $\Psi_{WL}$. Diese alternative Bestimmung wird wie in dem Ausführungsbeispiel des in die Beschreibung einbezogenen Dokumentes beschrieben durchgeführt. Die alternative Bestimmung wird dabei parallel zur Bestimmung der Wellenlaufrichtung $\psi_{WL}$ gemäß vorstehend beschriebenem Ausführungsbeispiel vorgenommen. Auf diese Weise werden zwei Werte für die Wellenlaufrichtung $\Psi_{WL}$ erhalten. Über eine Ausgleichsrechnung wird aus den beiden so berechneten Werten für die Wellenlaufrichtung $\Psi_{WL}$ ein endgültiger Wert für die Wellenlaufrichtung $\Psi_{WL}$ bestimmt. Die beiden Werte für die Wellenlaufrichtung $\Psi_{WL}$ werden miteinander verglichen und es wird aus diesem Vergleich ein weiteres Gütesignal für die Bestimmungen der Wellenlaufrichtung $\psi_{WL}$ ermittelt.

Ferner optional wird in einem weiteren Ausführungsbeispiel zusätzlich zu den vorbeschriebenen Verfahrensschritten der Umlaufsinn des zeitlichen Umlaufs des Bewegungszustandes des Containerschiffs zur Bestimmung der Wellenlaufrichtung herangezogen. Der Bewegungszustand resultiert dabei aus der gegenseitigen zeitlichen Abhängigkeit der Gierwinkelgeschwindigkeit und des Stampfwinkels. In weiteren, nicht eigens gezeigten Ausführungsbeispielen resultiert der Bewegungszustand aus der gegenseitigen zeitlichen Abhängigkeit der Hubgeschwindigkeit und dem Stampfwinkel oder der gegenseitigen zeitlichen Abhängigkeit der Hubgeschwindigkeit und der Stampfgeschwindigkeit.

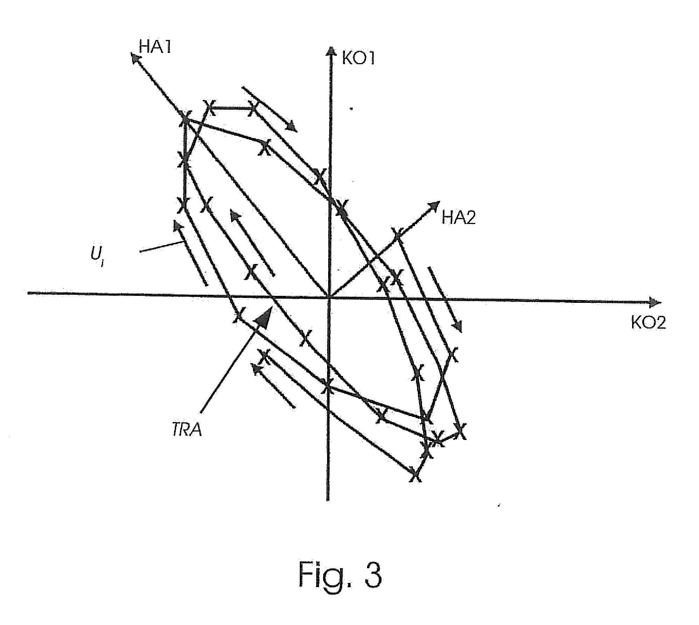

Der Bewegungszustand des Containerschiffs wird dazu durch einen zweikomponentigen Zustandsvektor beschrieben. Die Komponenten dieses Zustandsvektors sind durch die Gierwinkelgeschwindigkeit und den Stampfwinkel gebildet. Diese Komponenten des Zustandvektors sind jeweils entlang der Koordinatenachsen KO1 und KO2 (s. Fig. 3) aufgetragen. Der durch den Zustandsvektor beschriebene Zustandspunkt überstreicht mit der zeitlichen Änderung von Gierwinkelgeschwindigkeit und Stampfwinkel eine Trajektorie TRA. Diese Trajektorie TRA besitzt (abgesehen von Messungenauigkeiten und weiteren stochastischen Einflüssen) die Gestalt einer Ellipse. Die Trajektorie TRA ist aus diskreten Punkten zusammengesetzt, welche aus den zeitlich diskreten Erfassungen der Gierwinkelgeschwindigkeit und des Stampfwinkels resultieren. Die Trajektorie TRA weist zwei Hauptachsen HA1 und HA2 auf. Die längere Hauptachse HA1 der Trajektorie TRA wird als Referenzachse zur Beurteilung des Umlaufsinns herangezogen. Die Referenzachse HA1 teilt die Trajektorie TRA in zwei Teile. Ein erster Teil der Trajektorie TRA ist in positiven Koordinatenrichtungen der Koordinatenachsen KO1 und KO2 von der Referenzachse HA1 gelegen, ein zweiter Teil in negativen Koordinatenrichtungen. Es wird ermittelt, an wie vielen Punkten des ersten Teils der Trajektorie TRA eine Bewegung des Zustandspunkts in negativer Koordinatenrichtung der Koordinatenachse KO1 auftritt und an wie vielen Punkten des zweiten Teils der Trajektorie TRA eine Bewegung in positiver Koordinatenrichtung KO1 auftritt. Die ermittelten Anzahlen solcher Punkte werden summiert und zur Gesamtanzahl sämtlicher Punkte der Trajektorie *TRA* ins Verhältnis gesetzt. Abhängig davon, ob das Verhältnis größer oder kleiner als 50% ist, wird die Umlaufrichtung des Bewegungszustandes entlang der Trajektorie *TRA* bestimmt.

Alternativ wird bei diesem Ausführungsbeispiel eine dritte Bewegungsgröße des Containerschiffs erfasst und der Bewegungszustand des Containerschiffs durch einen dreikomponentigen Zustandsvektor beschrieben. Dann wird eine dreidimensionale Trajektorie *TRA* (nicht gesondert dargestellt) betrachtet, wobei anstelle einer Referenzachse eine Referenzebene zur Unterteilung der Punkte gewählt wird.

Zur Erhöhung der Zuverlässigkeit der Bestimmung des Umlaufsinns wird dieser zusätzlich aus einer Summe lokaler Umlaufsinne (um die Trajektorie *TRA* umlaufende Pfeile in Fig. 3) gemäß der Gleichung (1) der Beschreibung berechnet und mit dem Umlaufsinn wie zuvor beschrieben verglichen.

Abhängig vom derart bestimmten Umlaufsinn wird auf das Vorzeichen der Wellenlaufrichtung bezüglich einer bestimmten Richtung geschlossen. Dieses Vorzeichen wird mit den Bestimmungen der Wellenlaufrichtung wie eingangs beschrieben verglichen. Gegebenenfalls erfolgt eine Korrektur einer oder mehrerer der zuvor bestimmten Wellenlaufrichtungen.

**Bezugzeichen**

| | |
|---|---|
| $t_0, ..., t_1$ | - Zeitpunkte |
| $\boldsymbol{x}(t)$ | - Vektor umfassend die 6 Freiheitsgrade des Wasserfahrzeugs und ihrer erste zeitlichen Ableitungen |
| 1 | - Zwischenspeicherung |
| $\boldsymbol{x}(t_0, ..., t_1)$ | - Matrix der zeitlichen Verläufe |
| $x(t_0, ..., t_1)$ | - Zeitlicher Verlauf der Längsposition |
| $y(t_0, ..., t_1)$ | - Zeitlicher Verlauf der Querposition |
| $z(t_0, ..., t_1)$ | - Zeitlicher Verlauf des Hubposition |
| $\Phi(t_0, ..., t_1)$ | - Zeitlicher Verlauf des Rollwinkels |
| $\Theta(t_0, ..., t_1)$ | - Zeitlicher Verlauf des Stampfwinkels |
| $\Psi(t_0, ..., t_1)$ | - Zeitlicher Verlauf der Gierwinkels |
| $dx(t_0, ..., t_1)/dt$ | - Zeitlicher Verlauf der Längsgeschwindigkeit |
| $dy(t_0, ..., t_1)/dt$ | - Zeitlicher Verlauf der Quergeschwindigkeit |
| $dz(t_0, ..., t_1)/dt$ | - Zeitlicher Verlauf der Hubgeschwindigkeit |
| $d\Phi(t_0, ..., t_1)/dt$ | - Zeitlicher Verlauf der Rollwinkelgeschwindigkeit |
| $d\Theta(t_0, ..., t_1)/dt$ | - Zeitlicher Verlauf der Stampfwinkelgeschwindigkeit |
| $d\Psi(t_0, ..., t_1)/dt$ | - Zeitlicher Verlauf der Gierwinkelgeschwindigkeit |
| $T_x$ | - Periodendauer der Längsposition |
| $T_y$ | - Periodendauer der Querposition |
| $T_z$ | - Periodendauer des Hubs |
| $T_\Phi$ | - Periodendauer des Rollwinkels |
| $y_0$ | - Schnittpunkt mit der Y-Achse |
| $\delta t$ | - zeitlicher Versatz |
| a | - Phasenverschiebungen |
| $y_0$ | - modifizierte Schnittpunkte mit der Y-Achse |
| a | - modifizierte Phasenverschiebungen |
| 2 | - Autokorrelationsberechnung |
| 3 | - Kreuzkorrelationsberechnung |
| 4 | - Ausgleichsrechnung |
| 5 | - Berechnung der Phasenverschiebung |
| 6 | - Fallweise Phasenverschiebung um $\pi$ |
| 7 | - Ausgleichsrechnung |
| $T_{beg}$ | - Periodendauer der Begegnung der Wasserwellen mit dem Wasserfahrzeug |
| $T...$ | - weitere Periodendauern |
| $\Psi_{WL}$ | - Wellenlaufrichtung |
| Q | - Gütesignal |
| KKF | - Kreuzkorrelationsfunktion |
| KO1 | - Koordinatenachse |
| KO2 | - Koordinatenachse |
| TRA | - Trajektorie |

$U_i$          - lokaler Umlaufsinn
HA1         - 1. Hauptachse
HA2         - 2. Hauptachse

**Patentansprüche**

1. Verfahren zur Bestimmung von Seegangsgrößen auf einem Wasserfahrzeug, bei welchem die zeitlichen Verläufe ($\mathbf{x}(t_0,...,t_1)$) mindestens zweier Bewegungsgrößen ($\mathbf{x}(t)$) des Wasserfahrzeugs erfasst werden und bei welchem aus zumindest einem Paar der zeitlichen Verläufe ($\mathbf{x}(t_0,...,t_1)$) mindestens ein Korrelationswert ($y_0$) mittels Kreuzkorrelation ermittelt (3) und zur Bestimmung (7) einer oder mehrerer Seegangsgrößen ($\Psi_{WL}$, $T_x$, $T_y$) herangezogen wird, wobei eine Bestimmung von Seegangsgrößen unabhängig von den Witterungsbedingungen erfolgt.

2. Verfahren nach Anspruch 1, bei welchem die zeitlichen Verläufe ($\mathbf{x}(t_0,...,t_1)$) von zumindest drei Bewegungsgrößen ($\mathbf{x}(t)$) des Wasserfahrzeugs erfasst werden und bei welchem aus je einem von mehreren Paaren zeitlicher Verläufe ($\mathbf{x}(t_0,...,t_1)$) mindestens ein Korrelationswert ($y_0$) ermittelt (3) wird.

3. Verfahren nach einem der vorhergehenden Ansprüche, bei welchem aus zumindest einem Paar zeitlicher Verläufe ($\mathbf{x}(t_0,...,t_1)$) mehrere Korrelationswerte in Form einer Kreuzkorrelationsfunktion herangezogen werden.

4. Verfahren nach Anspruch 3, bei welchem abhängig vom Funktionsverlauf der Kreuzkorrelationsfunktion ein zeitlicher Versatz *($\delta t$)* der zeitlichen Verläufe ($\mathbf{x}(t_0,...,t_1)$) des Paares zueinander ermittelt und zur Bestimmung (7) der einen oder mehreren Seegangsgrößen ($\Psi_{WL}$, $T_x$, $T_y$) herangezogen wird.

5. Verfahren zur Bestimmung von Seegangsgrößen auf einem Wasserfahrzeug, insbesondere nach einem der Ansprüche 1 bis 4, bei welchem der zeitliche Verlauf zumindest einer Bewegungsgröße ($x(t_0, ..., t_1)$) des Wasserfahrzeugs erfasst wird und bei welchem aus dem zeitlichen Verlauf dieser Bewegungsgröße ($x(t_0, ..., t_1)$) eine Autokorrelationsfunktion ermittelt (2) wird, deren Funktionsverlauf zur Bestimmung (4) einer oder mehrerer Seegangsgrößen ($\Psi_{WL}$, $T_x$, $T_y$) herangezogen wird.

6. Verfahren nach Anspruch 5, bei welchem abhängig vom Funktionsverlauf der Autokorrelationsfunktion ein zeitlicher Versatz des zeitlichen Verlaufs der zumindest einen Bewegungsgröße zu sich selbst ermittelt und herangezogen wird.

7. Verfahren nach einem der vorhergehenden Ansprüche, bei welchem die zumindest eine Seegangsgröße die Wellenlaufrichtung der Wasserwellen ($\psi_{WL}$) ist.

8. Verfahren nach einem der vorhergehenden Ansprüche, bei welchem die oder mehrere Seegangsgrößen die Begegnungsfrequenz oder die Periodendauer ($T_{beg}$) der Begegnung der Wasserwellen mit dem Wasserfahrzeug und/oder eine oder mehrere Eigenfrequenzen oder Periodendauern ($T_x$, $T_y$, $T_\Phi$, $T_\Theta$) der Eigenbewegung des Wasserfahrzeugs im Seegang ist bzw. sind.

9. Verfahren nach einem der vorhergehenden Ansprüche, bei welchem ein zeitlicher Versatz *($\delta t$)* der zeitlichen Verläufe ($\mathbf{x}(t_0,...,t_1)$) eines Paares abhängig von der bzw. den Eigenfrequenzen des Wasserfahrzeugs im Seegang und/oder der Begegnungsfrequenz der Wasserwellen mit dem Wasserfahrzeug, insbesondere abhängig von dem oder den Verhältnissen der Eigenfrequenz und der bzw. den Begegnungsfrequenzen, ermittelt und zur Bestimmung des zumindest einen Korrelationswertes ($y_0$) herangezogen wird.

10. Verfahren nach einem der vorhergehenden Ansprüche, bei welchem eine oder mehrere der Bewegungsgrößen die Schwerpunktsposition des Wasserfahrzeugs entlang einer Hauptträgheitsachse des Wasserfahrzeugs und/oder die erste oder eine höhere zeitliche Ableitung der Schwerpunktsposition und/oder die Orientierung des Wasserfahrzeugs um eine Hauptträgheitsachse des Wasserfahrzeugs und/oder die erste oder eine höhere zeitliche Ableitung der Orientierung und/oder das bzw. die Vorzeichen einer oder mehrerer der vorgenannten Größen beurteilt von einem Referenznullwert ist bzw. sind.

11. Verfahren nach einem der vorhergehenden Ansprüche, bei welchem der Umlaufsinn des zeitlichen Umlaufs des Bewegungszustandes des Wasserfahrzeugs entlang einer aus einer gegenseitigen Abhängigkeit zumindest zweier Bewegungsgrößen resultierenden Trajektorie (*TRA*) erfasst und zur Ermittlung des Korrelationswertes ($y_0$) und/oder

zur Bestimmung der Seegangsgröße ($\Psi_{WL}$) herangezogen wird.

12. Verfahren zur Bestimmung von Seegangsgrößen auf einem Wasserfahrzeug, bei welchem zumindest eine der Seegangsgrößen ($\psi_{WL}$) nach zumindest zwei voneinander abweichenden Verfahren, von denen zumindest eines ein Verfahren nach einem der vorhergehenden Ansprüche ist, bestimmt wird, wobei die jeweils bestimmten Werte für die Seegangsgröße ($\psi_{WL}$) einem Vergleich miteinander unterzogen werden und abhängig von diesem Vergleich die Güte der Bestimmung der Seegangsgröße ermittelt wird.

**Claims**

1. A method for determining sea motion variables on a water vehicle, with which the temporal courses ($\mathbf{x}(t_0,...,t_1)$) of at least two movement variables ($\mathbf{x}(t)$) of the water vehicle are detected and with which at least one correlation value ($y_0$) is determined (3) from at least one pair of the temporal courses ($\mathbf{x}(t_0,...,t_1)$) by way of cross correlation and is used for determining (7) one or more sea motion variables ($\Psi_{WL}, T_x, T_y$), wherein a determining of sea motion variables is effetced independently on the weather conditions

2. A method according to claim 1, with which the temporal courses ($\mathbf{x}(t_0,...,t_1)$) of at least three movement variables ($\mathbf{x}(t)$) of the water vehicle are detected and with which at least one correlation value ($y_0$) is determined (3) from in each case one of several pairs of temporal courses ($\mathbf{x}(t_0, ...,t_1)$).

3. A method according to one of the preceding claims, with which several correlation values from at least one pair of temporal courses ($\mathbf{x}(t_0,...,t_1)$) are used in the form of a cross-correlation function.

4. A method according to claim 3, with which a temporal offset ($\delta t$) of the temporal courses ($\mathbf{x}(t_0,...,t_1)$) of the pair to one another is determined in a manner depending on the function course of the cross-correlation function and is used for determining (7) the one or more sea motion variables ($\Psi_{WL}, T_x, T_y$).

5. A method for determining sea motion variables on a water vehicle, in particular according to one of the claims 1 to 4, with which the temporal course of at least one movement variable ($\mathbf{x}(t_0,...,t_1)$) of the water vehicle is detected and with which an autocorrelation function is determined (2) from the temporal course of this movement variable ($\mathbf{x}(t_0,...,t_1)$), and the function course of this autocorrelation function is used for determining (4) one or more sea motion variables ($\Psi_{WL}, T_x, T_y$).

6. A method according to claim 5, with which a temporal offset of the temporal course of the at least one movement variable to itself is determined in a manner depending on the function course of the autocorrelation function, and used.

7. A method according to one of the preceding claims, with which the at least one sea motion variable is the wave running direction of the water waves ($\Psi_{WL}$).

8. A method according to one of the preceding claims, with which the sea motion variable or several sea motion variables is or are the encounter frequency or the period duration ($T_{beg}$) of the encounter of the water waves with the water vehicle and/or one or more natural frequencies or period durations ($T_x, T_y, T_\Phi, T_\Theta$) of the natural movement of the water vehicle in the sea motion.

9. A method according to one of the preceding claims, with which a temporal offset ($\delta t$) of the temporal courses ($\mathbf{x}(t_0,...,t_1)$) of a pair is determined in a manner depending on the natural frequency or frequencies of the water vehicle in the sea motion and/or on the encounter frequency of the water waves with the water vehicle, in particular depending on the ratio and/or ratios of the natural frequency and of the encounter frequency or frequencies, and used for determining the at least one correlation value ($y_0$).

10. A method according to one of the preceding claims, with which one or more of the movement variables is or are the centre of gravity position of the water vehicle along a main inertia axis of the water vehicle and/or the first or a higher temporal derivative of the centre of gravity position and/or the orientation of the water vehicle about a main inertia axis of the water vehicle and/or the first or a higher temporal derivative of the orientation and/or the polarity or polarities of one or more of the previously mentioned variables, assessed from a reference zero value.

11. A method according to one of the preceding claims, with which the revolving direction of the temporal course of the movement condition of the water vessel along a trajectory (*TRA*) resulting from a mutual dependency of at least two movement variables is detected and used for determining the correlation value ($y_0$) and/or for determining the sea motion variable ($\Psi_{WL}$).

12. A method for determining sea motion variables on a water vehicle, with which at least one of the sea motion variables ($\Psi_{WL}$) is determined according to at least two methods which differ from one another, of which at least one is a method according to one of the preceding claims, wherein the respectively determined values for the sea motion variable ($\Psi_{WL}$) are subjected to a comparison to one another, and the quality of the determining of the sea motion variable is determined depending on this comparison.

**Revendications**

1. Procédé de détermination de grandeurs relatives à l'état de la mer sur un navire, dans lequel les variations dans le temps ($x(t_0,...,t_1)$) d'au moins deux grandeurs de mouvement *(x(t))* du navire sont enregistrées et dans lequel, sur la base d'au moins une paire des variations dans le temps ($x(t_1,...,t_1)$), on établit (3) au moins une valeur de corrélation ($y_0$) au moyen d'une corrélation croisée, et on l'utilise pour la détermination (7) d'une ou de plusieurs grandeurs relatives à l'état de la mer ($\Psi_{WL}$, $T_x$, $T_y$), la détermination des grandeurs relatives à l'état de la mer s'effectuant de manière indépendante des conditions météorologique.

2. Procédé selon la revendication 1, dans lequel les variations dans le temps ($\mathbf{x}(t_0,...,t_1)$) d'au moins trois grandeurs de mouvement *(x(t))* du navire sont collectées et dans lequel, sur la base d'une parmi plusieurs paires de variations dans le temps ($x(t_0,...,t_1)$), on établit (3) au moins une valeur de corrélation ($y_0$).

3. Procédé selon l'une des revendications précédentes, dans lequel, sur la base d'au moins une paire de variations dans le temps ($\mathbf{x}(t_0,...,t_1)$), on utilise plusieurs valeurs de corrélation sous la forme d'une fonction de corrélation croisée.

4. Procédé selon la revendication 3, dans lequel, en fonction de la variation de la fonction de corrélation croisée, on établit un décalage temporel ($\delta t$) des variations dans le temps ($\mathbf{x}(t_0,...,t_1)$) de la paire, l'une par rapport à l'autre, et on l'utilise pour la détermination (7) de la grandeur ou de plusieurs grandeurs relatives à l'état de la mer ($\Psi_{WL}$, $T_x$, $T_y$).

5. Procédé de détermination de grandeurs relatives à l'état de la mer sur un navire, en particulier selon l'une des revendications 1 à 4, dans lequel la variation dans le temps d'au moins une grandeur de mouvement ($\mathbf{x}(t_0,...,t_1)$) du navire est enregistrée et dans lequel, sur la base de la variation dans le temps de ces grandeurs de mouvement ($x(t_0,...,t_1)$), on établit une fonction d'autocorrélation (2) dont la variation de fonction est utilisée pour la détermination (4) d'une ou de plusieurs grandeurs relatives à l'état de la mer ($\Psi_{WL}$, $T_x$, $T_y$).

6. Procédé selon la revendication 5, dans lequel, en fonction de la variation de la fonction d'autocorrélation, on établit et on utilise un décalage temporel de la variation dans le temps de la grandeur de mouvement, au moins au nombre de une, par rapport à elle-même.

7. Procédé selon l'une des revendications précédentes, dans lequel la grandeur relative à l'état de la mer, au moins au nombre de une, est la direction de propagation des vagues ($\Psi_{WL}$).

8. Procédé selon l'une des revendications précédentes, dans lequel la grandeur ou plusieurs grandeurs relatives à l'état de la mer est ou sont la fréquence de rencontre ou la période ($T_{beg}$) de rencontre des vagues avec le navire et/ou une ou plusieurs fréquences propres ou périodes ($T_x$, $T_y$, $T_\Phi$, $T_\Theta$) du mouvement propre du navire dans la houle.

9. Procédé selon l'une des revendications précédentes, dans lequel on établit un décalage temporel ($\delta t$) des variations dans le temps ($\mathbf{x}(t_0,...,t_1)$) d'une paire en fonction de la ou des fréquences propres du navire dans la houle et/ou de la fréquence de rencontre des vagues avec le navire, en particulier en fonction du ou des rapports entre la fréquence propre et la ou les fréquences de rencontre, et on l'utilise pour déterminer la valeur de corrélation ($y_0$), au moins au nombre de une.

10. Procédé selon l'une des revendications précédentes, dans lequel une ou plusieurs des grandeurs de mouvement est ou sont la position du centre de gravité du navire le long d'un axe d'inertie principal du navire et/ou la dérivée première temporelle ou une dérivée temporelle d'ordre supérieur de la position du centre de gravité et/ou l'orientation du navire autour d'un axe d'inertie principal du navire et/ou la dérivée première temporelle ou une dérivée temporelle d'ordre supérieur de l'orientation et/ou le signe ou les signes d'une ou de plusieurs des grandeurs précitées estimés à partir d'un zéro de référence.

11. Procédé selon l'une des revendications précédentes, dans lequel on enregistre le sens de circulation du cycle temporel de l'état de mouvement du navire le long d'une trajectoire (TRA) qui résulte d'une relation de dépendance mutuelle d'au moins deux grandeurs de mouvement, et on l'utilise pour la détermination de la valeur de corrélation ($y_0$) et/ou pour la détermination de la grandeur relative à l'état de la mer ($\Psi_{WL}$).

12. Procédé de détermination de grandeurs relatives à l'état de la mer sur un navire, dans lequel au moins une des grandeurs relatives à l'état de la mer ($\Psi_{WL}$) est déterminée par au moins deux procédés différents l'un de l'autre, dont au moins l'un est un procédé selon l'une des revendications précédentes, dans lequel les valeurs déterminées respectivement pour la grandeur relative à l'état de la mer ($\Psi_{WL}$) sont soumises à une comparaison mutuelle, et la qualité de la détermination de la grandeur relative à l'état de la mer est établie en fonction de cette comparaison.

Fig. 1

Fig. 2

Fig. 3

EP 2 548 796 B1

**EP 2 548 796 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6382022 B1
- DE 102009041055